(19) Europäisches Patentamt
European Patent Office
Office européen des brevets

(11) **EP 0 638 211 B1**

(12) **EUROPEAN PATENT SPECIFICATION**

(45) Date of publication and mention
of the grant of the patent:
**25.06.1997 Bulletin 1997/26**

(51) Int Cl.⁶: **H02M 5/293**, G05F 1/455,
H05B 39/04

(21) Application number: **93911521.8**

(22) Date of filing: **30.04.1993**

(86) International application number:
**PCT/FI93/00185**

(87) International publication number:
**WO 93/22826 (11.11.1993 Gazette 1993/27)**

(54) **ELECTRONIC POWER REGULATOR**

ELEKTRONISCHE LEISTUNGSREGLER

REGULATEUR ELECTRONIQUE DE PUISSANCE

(84) Designated Contracting States:
**AT BE CH DE DK FR GB IT LI NL SE**

(30) Priority: **30.04.1992 FI 921956**

(43) Date of publication of application:
**15.02.1995 Bulletin 1995/07**

(73) Proprietor: **A. AHLSTROM CORPORATION**
**29600 Noormarkku (FI)**

(72) Inventor: **SAIRANEN, Martti**
**FIN-01800 Klaukkala (FI)**

(74) Representative: **Lehn, Werner, Dipl.-Ing. et al**
**Hoffmann, Eitle & Partner,**
**Patentanwälte,**
**Arabellastrasse 4**
**81925 München (DE)**

(56) References cited:
**EP-A- 0 425 035**     **EP-A- 0 515 961**
**DE-A- 3 618 749**     **US-A- 4 528 494**
**US-A- 5 038 081**

## Description

The present invention relates to an electronic power regulator for regulating the AC power being fed into a load as defined in the preamble of claim 1. The electronic power regulator according to the invention is especially suitable for regulating the power of one or more light sources, but it can as well be used for regulating the power of other kinds of loads, such as resistive and/or capacitative loads.

A power regulator for a light source, comprising a switching unit arranged in series with the load and accomplished by means of a diode bridge and a field-effect transistor operating as a switch, is previously known. During the positive and negative half-cycle the input current traverses alternatingly the two opposing diodes and the field-effect transistor, the direction of the current always being the same in the transistor. The drawback, nevertheless, is that as the diodes of the diode bridge are fixed components, they will cause power losses in the switching unit.

Finnish patent publication FI 61781 discloses a switching element consisting of two switches comprising transistors, the collectors of which are interconnected. Two reverse-connected diodes have been connected parallel to each of the transistors, the direction of the diodes being from the emitter to the collector of the parallel transistor. The input current traverses, depending on the half-cycle, always one diode and one collector-emitter connection. Thereby one of the diodes always forms a constant power loss, which causes additional power losses in the power regulator. These power losses increase greatly as the current increases. It should additionally be noted that this connecting element is not used in the power regulator by itself, but the publication requires that a comparable connecting element be connected also in parallel with the load. This is especially so when the load is an inductive or capacitative one.

US-A-5,038,081 discloses an electronic power regulator, the switching unit of which comprises a pair of field effect transistors. The power regulator circuit is specially intended for use with loads including capacitative loads, especially low voltage incandescent light bulbs. With this power regulator, the flow of current is started at the starting point of the half-cycle of the AC voltage, and is terminated at a desired point of the same half-cycle. The advantage of this power regulator is that its power consumption is smaller than that of the other known solutions. A disadvantage of this invention is, nevertheless, that the two field effect transistors of the switching unit are controlled separately so, that one transistor operates during the positive half-cycle of the AC voltage while the other operates during the negative half-cycle.

The object of the invention is to disclose a new electronic power regulator capable of avoiding, or at least minimizing, the drawbacks of previous power regulators. It is a further object of the invention to provide for a new, reliable and simple electronic power regulator having a diminutive power loss.

The characteristic features of the electronic power regulator according to the invention are described in claim 1.

The electronic power regulator according to the invention for regulating the AC power being fed into a load comprises a switching unit and a control unit, the switching unit being connected in series with the load. The switching unit is most preferably controlled by means of the control unit so that the input of current is started when the half-cycle of current across the switching unit begins and the input is stopped at a desired point of the same half-cycle. The switching unit according to the invention comprises a plurality of pairs of field effect transistors connected in series, in a way known per se so that the sources of both of the field effect transistors are interconnected, the drain of one of the field effect transistors is connected to the AC source, and the drain of the other transistor is connected to the load and that the gates of both the transistors are connected to the control unit, by means of which the operation of the field effect transistors as switches is controlled.

An advantage of the invention is that unipolar semiconductors, especially field effect transistors, are used as switches of the switching unit. In principle, a field effect transistor is insensitive to the direction of the current between the source and drain, i.e. the current can traverse the channel in either direction. This fact is utilized in the invention so that the only power losses are generated because of the channel resistance of the pairs of parallel-connected field effect transistors; the input current to the load does not have to traverse any other components besides the parallel field effect transistors. Typically, the channel resistance of a field effect transistor is 0.5 - 0.05 $\Omega$, but it is expected that with the introduction of new field effect transistors the channel resistance will still be decreased from the above values. Because of the parallel connection of the pairs of field effect transistors the loss resistance is further considerably diminished. Thus it is an especial advantage of the invention that the power regulator generates very small power losses. Consequently, this power regulator is capable of controlling very high rates of input power.

In the power regulator according to the invention a diode bridge is arranged across the switching unit, two of the diodes of the diode bridge being body diodes of each pair of field effect transistors, the diode bridge forming the operation voltage of the control unit.

An advantage of the above embodiment is that the switching unit receives its operation voltage straight from the same AC source that is fed into the load. Thereby no other arrangements for voltage are needed and the circuitry needed for the electronic power regulator is simplified.

In the electronic power regulator of the invention the control unit comprises a voltage metering arrangement, preferably a plurality of resistors connected in series, for metering the voltage across a forward-biased group of field effect transistors, an over-current protection unit, in which the result from the voltage metering is used for monitoring the current traversing the group of field effect transistors and for limiting the over-current when the group of field effect transistors is turned on, and/or a synchronizing unit, in which the result from the voltage metering is used for carrying out the synchronizing of the control when the group of field effect transistors is turned off.

An advantage of the above-mentioned embodiment of an electronic power regulator according to the invention is that both current protection and synchronization, or at least one of these, can easily be arranged for the power regulator by means of a simple voltage metering arrangement. The purpose of the synchronization is that the load can be connected accurately and reliably at the zero point of the voltage acting across the switching unit. When the load is a resistive one, the synchronization is effected into the AC voltage of the AC network. With a capacitative load the synchronization point is moved in relation to the zero points of the network AC voltage. It is easy to recognize the zero points of the voltage half-cycle and thereby to determine the correct moment of switching the power off for each half-cycle. The control unit utilizes, e.g., a measuring of time commencing at the zero point of the half-cycle and an adjustable time limit for effecting the point of switching the power off. Further, it is simple to arrange an over-current protection in connection with the power regulator in the manner described above. Over-current protection is needed to prevent damage to the switching unit in case of a short circuit. The voltage across both of the field effect transistors is metered across the pairs of field effect transistors and, if needed, the transistors are turned off by means of the control unit.

In one embodiment of the electronic power regulator the over-current protection unit comprises both a field effect transistor, to the gate of which is fed the metering voltage from the voltage metering arrangement for turning a transistor from off to on in case of a short circuit, and a circuit arrangement for discharging the charges of the gates of the pairs of field effect transistors of the switching unit in order to turn the transistors off. Using a field effect transistor in the over-current protection unit simplifies the circuit solution and unifies the structure of the power regulator.

In one embodiment of the electronic power regulator the synchronizing unit comprises a field effect transistor, the gate of which is fed the metering voltage from the voltage metering arrangement for turning the field effect transistor from off to on, and from which field effect transistor a synchronizing signal is received as the output signal.

The advantage of the synchronizing unit as described above is its simplicity and that the synchronizing signal available from the field effect transistor can be directly fed into a suitable logical circuit or the like, by means of which the moment of interrupting the input current into the load during the half-cycle is controlled.

In one advantageous embodiment of the electronic power regulator the field effect transistors are of the n-type. The channel resistance of an on-turned field effect transistor of this type is usually smaller than that of other types of field effect transistors.

A still further advantage of a power regulator according to the invention is that it requires very little space. The simple design causing the apparatus to be inexpensive is also an advantage. More, this kind of a power regulator is noiseless.

In the following, the invention is described in more detail by way of reference to the following drawings, of which

Fig. 1 illustrates schematically an electronic power regulator according to the invention;
Fig. 2 illustrates schematically the electronic power regulator according to the invention;
Fig. 3 illustrates schematically the over-current protection in a power regulator as illustrated in fig. 2;
Fig. 4 illustrates schematically the carrying out of synchronization in the power regulator as illustrated in fig. 2;
Fig. 5 illustrates voltage shapes in power regulators as illustrated in figs. 2, 3, 4;
Fig. 6 illustrates schematically a third electronic power regulator according to the invention; and
Fig. 7 illustrates voltage shapes in the synchronization unit of an electronic power regulator as illustrated in fig. 6.

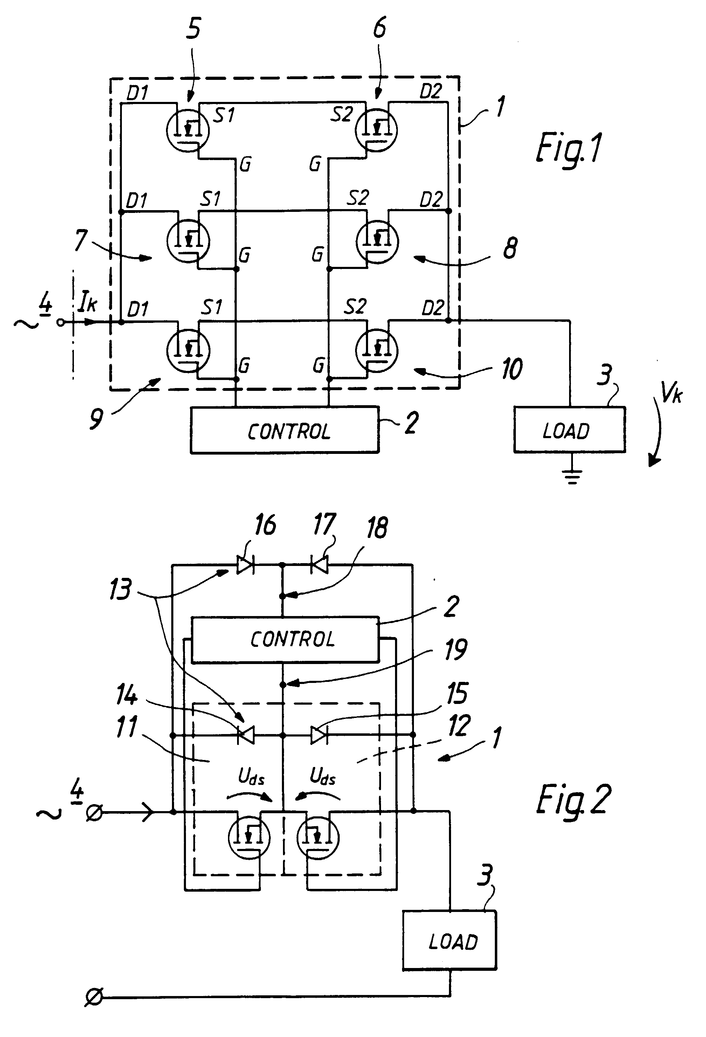

Fig. 1 illustrates the principal scheme of an electronic power regulator according to the invention. The power regulator comprises a switching unit 1 and a control unit 2. The switching unit 1 has been connected in series with the load 3. By means of the power regulator it is possible to adjust the AC power from an AC power source 4, preferably an AC network, to suit the load 3 as desired.

According to the invention, the switching unit 1 comprises a plurality of pairs of field effect transistors 5,6; 7,8; 9,10 so that the sources S1, S2 of each pair of transistors have been interconnected, the drains D1 of the first field effect transistors 5; 7; 9 of the pairs of field effect transistors are interconnected and connected further to the AC source 4, and the drains D2 of the second field effect transistors 6; 8; 10 of the pairs of field effect transistors are interconnected and connected further to the load 3. The gates G1, G2 of both of the transistors of the pairs of transistors are connected to the control unit 2. Preferably the field effect transistors 5, 6; 7, 8; 9,10 are of the n-type.

The switching unit 1 thus comprises a plurality of pairs of field effect transistors 5,6; 7,8; 9,10 that have been connected so as to form a symmetrical unit both together and as separate pairs. The input current from the AC source traverses during both the negative and positive AC phase the channel of both of the field effect transistors of a pair of field effect transistors. Because of the symmetrical connection of the pairs of field effect transistors of the switching unit 1, the switching unit looks the same both when seen from the direction of the load 3 to the AC power source 4 as when seen from the AC power source to the load.

The switching unit 1 is controlled via the gates G1, G2 of the pairs of field effect transistors. The pairs of transistors 5,6; 7,8; 9,10 are turned from off to on by means of the control unit 2, depending mainly on the properties of the load 3. When the transistor is turned off, there is principally no current flowing through the channel of the field effect transistor 5, 6, whereas an on-turned channel is open and the current can traverse the channel.

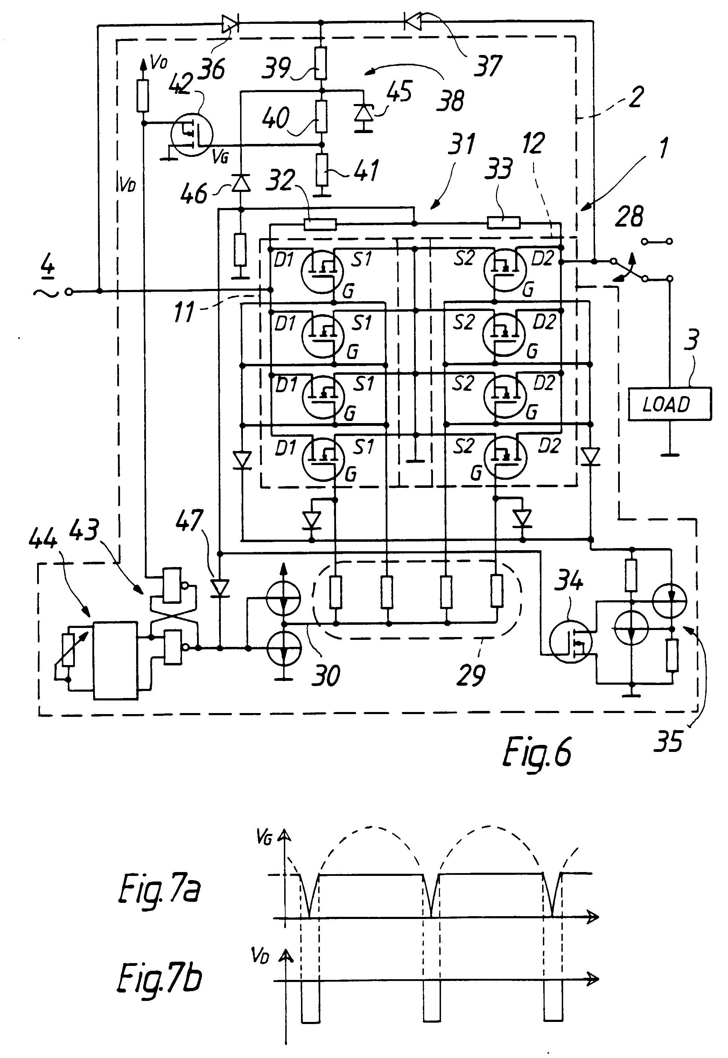

The switching unit 1 is controlled by means of the control unit 2 synchronously with the zero points of the voltage acting over the switching unit 1. With a resistive load this is accomplished by starting the input of electric power to the load 3 at the starting moment, i.e. the zero point of the half-cycle of the voltage V (see fig. 5a) from a current source, such as the mains, and by cutting the input at a desired moment t of the half-cycle in input current (see fig. 5b). Thus, power is being fed into the load 3 during the time span 0 - t of the half-cycle of the input voltage V. The input current $I_k$ and the voltage $V_k$ across the load are acted on by adjusting the moment t, and thereby the total power fed into load 3 is controlled.

The input current $I_k$ passes in the switching unit 1 divided in the channels of each of the pairs of field effect transistors 5, 6; 7, 8; 9, 10 and its strength is $I_k/3$ when the field effect transistors are turned on. Power losses are generated in each field effect transistor by the channel resistance $R_k$ between the source S and drain D. With the most suitable n-type field effect transistors a typical value for the channel resistance $R_k$ is between 0.5-0.05 Ω. Thus, when the input current $I_k$ is supposed to be 1A, the maximum power loss of the switching unit 1 can, in the embodiment of fig. 1, be calculated to be

$$P_h = 3 \left(\frac{I_k}{3}\right)^2 (R_k + R_k) = \frac{I_k^2}{3} \cdot 2R_k =$$

$$\frac{IA^2}{3} \cdot 2 \cdot 0.5 \, \Omega = 0.33 \, W$$

The power losses in known power regulators are clearly larger than this. At a minimum, they are of the order of 1-3W. Thus, the power losses generated by a power regulator according to the present invention are considerably smaller.

Fig. 2 illustrates the electronic power regulator according to the invention. An AC power source 4 feeds current into the load 3 via the power regulator. The switching unit 1 of the power regulator is exemplified by means of one pair of field effect transistors 11, 12, even though the connecting unit comprises a plurality of pairs of field effect transistors, as was previously illustrated in fig. 1. A diode bridge 13 is arranged across the switching unit 1, two of the diodes of the diode bridge being body diodes of each pair of field effect transistors 11, 12 and the other two diodes 16, 17 being separate diodes. The operating voltage of the control unit 2 is formed by means of the diode bridge 13, i.e. the control unit 2 is arranged between the terminals 18, 19 in the middle of the diode bridge. Thus, the potential of the control unit 2 is in connection with the voltage of the sources S1, S2 of the pairs of field effect transistors 11, 12. The control unit 2 is used to turn the pairs of field effect transistors 11, 12 simultaneously on and, accordingly, off.

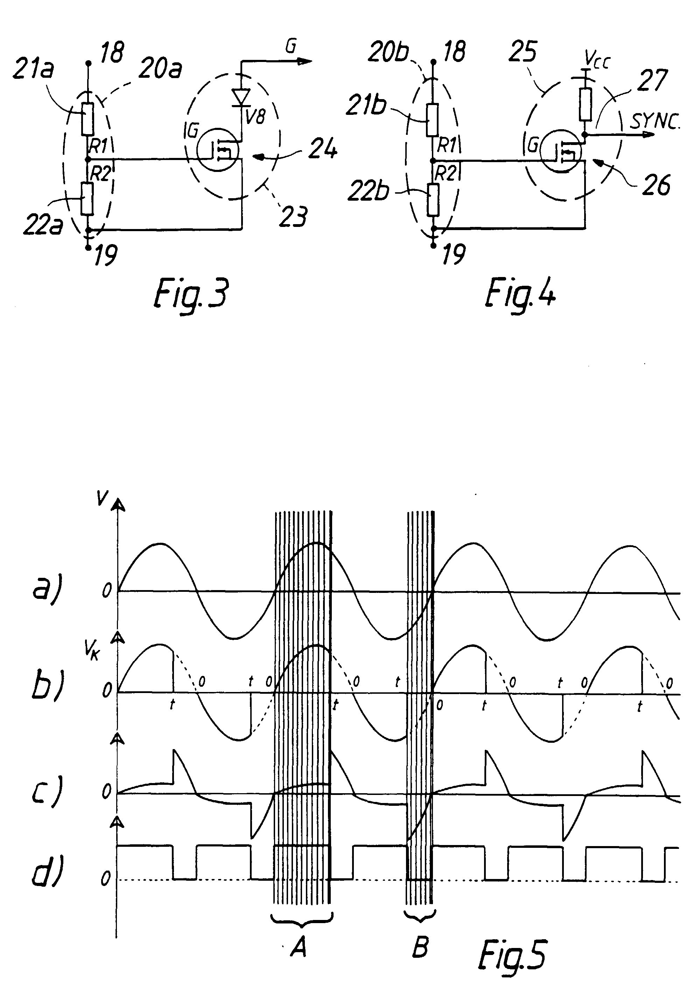

The control unit 2 of fig. 2 comprises a voltage metering arrangement 20a, shown in fig. 3, for metering the voltage across the forward-biased group of field effect transistors 11, 12 af the switching unit 1. Preferably, the voltage metering arrangement 20a comprises a group of resistors 21a, 22a connected in series, that have been arranged in connection with each of the field effect transistors 11, 12.

Fig. 3 illustrates an over-current protection unit 23, in which the result from the voltage metering arrangement 20a is used for monitoring the current passing through the group of field effect transistors 11, 12 and for limiting over-current when the group of field effect transistors is turned on. In this case the over-current protection unit 23 comprises a field effect transistor 24, to the gate G of which is fed the metering voltage from the voltage metering arrangement 20a for turning the field effect transistor 24 from off to on in case of a short circuit. The field effect transistor 24 is followed by a suitable circuit for discharging the charges of the gates G of the pairs of field effect transistors 11, 12 and for turning them off.

The voltage metering arrangement 20b, such as a chain of resistors 21b, 22b, forming a part of the control unit 2, can also be used for controlling the synchronizing unit 25, as is illustrated in fig. 4. The voltage metering result is used for controlling the control unit for synchronization purposes when the group of field effect transistors 11, 12 is turned off. The synchronizing unit 25 comprises a field effect transistor 26, to the gate G of which is fed the metering voltage from the voltage metering arrangement 20 for turning the field effect transistor from on to off. The drain 27 of the field effect transistor 26 then gives the synchronizing signal as output signal.

Fig. 5c illustrates the metering voltage from voltage metering arrangement 20a, 20b in proportion with the network voltage V and load voltage $V_k$, respectively figs. 5a and 5b. The gate voltage curve for controlling the pairs of field effect transistors 11, 12 of the control unit 2 is illustrated in fig. 5d. Over-current protection metering is carried out when the grid voltage (fig. 5d) of the pairs of field effect transistors 11, 12 is at its maximum and the pairs of field effect transistors are turned on. In this case the network voltage V = load voltage $V_k$ during the period 0 - t. The voltage metering B for synchronization is, in turn, carried out when the gate voltage (fig. 5d) of the pairs of field effect transistors is zero, i.e. the field effect transistors are turned off and the load voltage is, respectively, zero (fig. 5b). The over-current monitoring area A and synchronizing area B have been marked in the appended figures 5a-5d.

Fig. 6 illustrates a power regulator according to the invention. The AC power source 4 is connected via the switching unit 1 and power switch 28 to load 3. The switching unit comprises a plurality of pairs of field effect transistors 11, 12, as in the power regulator of figs. 1 and 2. The sources S1, S2 of the field effect transistors are connected together and to the ground. The drains D1 are connected together and so are, respectively, the drains D2. The gates G of the field effect transistors are connected to the gate control switch 30 via gate resistors 29. The switching of field effect transistors 11, 12 is delayed by means of gate resistors 29 in order to minimize any radio frequency interference.

The voltage metering arrangement 31 comprises resistors 32, 33 by means of which the voltage across the switching unit 1 is measured for carrying out the over-current protection of field effect transistors 11, 12, as is described in connection with fig. 3. The metering voltage is taken from between resistors 32, 33 to the field effect transistor 34. If the metering voltage is greater than the threshold voltage of the field effect transistor 33, the field effect transistor is turned on and the gates G of the pairs of field effect transistors 11, 12 are grounded via control circuit 35. Thereby the field effect transistors 11, 12 are turned off, i.e. flow of current from the AC power source 4 to load 3 is interrupted.

Diodes 36, 37 corresponding to the diodes 16, 17 of the power regulator in fig. 2 have been arranged across the switching unit 1. The diode bridge is formed by means of diodes 36, 37 and the body diodes of the field effect transistors of the pairs 11, 12 of field effect transistors. Voltage metering arrangement 38 has been arranged in connection with the diode bridge, the arrangement comprising a chain of resistors, in this case resistors 39, 40, 41. The metering voltage acting across the switching unit 1 is taken from the voltage metering arrangement 38 and further fed to a field effect transistor 42. The internal voltage in the bridge formed by diodes 36, 37 and the body diodes of the pairs of field effect transistors 11, 12 is metered by means of this arrangement for synchronizing in accordance with the principle described with fig. 4. When the metering voltage is smaller than the threshold voltage of the gate of the field effect transistor, the field effect transistor 42 is turned off and the voltage of the drain of the field effect transistor rises to operation voltage $V_o$. Fig. 7 illustrates the voltage curve $V_G$ of the metering voltage to the gate of the field effect transistor, in fig. 7a, and the synchronization signal $V_D$ from the drain in fig. 7b.

The synchronization signal from the field effect transistor 42 is fed into a triggering circuit 43 formed of gate circuits, the triggering circuit being also fed the output signal from the time t control circuit 44. The signal from the triggering circuit 43 is further fed, amplified, to the common connecting point 30 of the gate resistors 29 for controlling the pairs of field effect transistors 11, 12 via their gates G.

The metering voltage to be fed to the field effect transistor from the voltage metering arrangement 31 is limited by means of a zener diode 45 (c.f. fig. 7a). The diode 46 protects the field effect transistor 42. Diode 47 prevents the voltage metering of the over-current protection when the pairs 11, 12 of field effect transistors have been turned off.

The power losses per field effect transistor of the switching unit of a power regulator according to the invention are clearly smaller than in previously known power regulators. It must be noted, that power regulators for light sources are in most cases installed in a limited space, such as a light switch box. This means, that when a power regulator according to the invention is installed on a mechanical base plate fitting in a light switch box it is, due to the small power losses, capable of regulating a large number of light sources, the total output of which can be, e.g., 2-3 kW.

The invention is not limited to the above-mentioned embodiments, but it can be modified in many ways within the scope of the invention, which is defined in the appended claims.

**Claims**

1. An electronic power regulator for regulating the AC power being fed into a load (3) comprises a switching unit (1) and a control unit (2), which switching unit (1) is connected in series with the load (3), and most preferably is controlled by means of the control unit (2) so that the input of current into the load is started when the half-cycle of the voltage acting over the switching unit starts and the input is stopped at a desired point of the same half-cycle, **characterized** in that

   - the switching unit (1) comprises a plurality of pairs of field effect transistors (5, 6, 7, 8; 9, 10; 11, 12), the sources (S1, S2) of both of the transistors of a pair (e.g. 5, 6) are interccnnected in a way known per se, the drain (D1) of one (5) of the field effect transistors is connected to an AC source (4), and the drain (D2) of the other transistor (6) is connected to the load (3) and that the gates (G1, G2) of both of the transistors (5, 6) are connected to the control unit (2), by means of which the operation of the field effect transistors as switches is controlled;
   - a diode bridge (13) is arranged across the switching unit (1), two (14, 15) of the diodes being body diodes of each pair of field effect transistors (11, 12), the diode bridge being used to form the operation voltage of the control unit (2);

- the control unit (2) comprises a voltage metering arrangement (20a, 20b; 31, 38) for metering the voltage across the group of field effect transistors (11, 12) of the switching unit; an over-current protection unit (23), in which the result from voltage measurement is used for monitoring the current passing through the group of field effect transistors (11, 12) and limiting the over-current when the group of field effect transistors (11, 12) is turned on (A, Fig. 5); and a synchronizing unit (25), in which the result from voltage measurement is used for synchronizing the power regulation when the group of field effect transistors (11, 12) is turned off (3, Fig. 5).

2. A power regulator according to claim 1, **characterized** in that the voltage metering arrangement (20a, 20b; 31, 38) comprises a plurality of resistors (21a, 22a, 21b, 22b; 32, 33, 39, 40, 41) connected in series, arranged in connection with both of the groups of field effect transistors (11, 12) of the switching unit (1).

3. A power regulator according to claim 1 or 2, **characterized** in that the over-current protection unit (23) comprises a field effect transistor (24), to the gate of which is fed the metering voltage from the voltage metering arrangement (20a) for turning the field effect transistor (24) from off to on in case of a short circuit, and a circuit arrangement for discharging the charges of the gates of the pairs of field effect transistors (11, 12) of the connecting unit (1) and for turning them off.

4. A power regulator according to claim 1, 2, or 3, **characterized** in that the synchronizing unit (25) comprises a field effect transistor (26), to the gate of which is fed the metering voltage from the voltage metering arrangement for turning the field effect transistor from on to off, and from which field effect transistor the synchrcnizing signal is thus received as output signal.

5. A power regulator according to any of the preceding claims, **characterized** in that the field effect transistors (5, 6; 7, 8; 9, 10; 11, 12) are of the n-type.

**Patentansprüche**

1. Elektronischer Leistungssteller zum Einstellen der in eine Last (3) eingespeisten Wechselspannungsleistung, mit einer Schalteinheit (1) und einer Steuereinheit (2), welche Schalteinheit (1) mit der Last (3) in Reihe geschaltet ist und bevorzugt mittels der Steuereinheit (2) gesteuert wird, so daß die Eingabe von Strom in die Last begonnen wird, wenn der Halbzyklus der über der Schalteinheit wirkenden Spannung beginnt, und die Eingabe an einem gewünschten Punkt desselben Halbzyklus beendet wird, dadurch gekennzeichnet, daß

- die Schalteinheit (1) eine Vielzahl von Paaren von Feldeffekttransistoren (5, 6, 7, 8; 9, 10; 11, 12) umfaßt, die Sources (S1, S2) der beiden Transistoren eines Paars (z.B. 5, 6) in einer bekannten Weise verbunden sind, der Drain (D1) eines (5) der Feldeffekttransistoren mit einer Wechselspannungsquelle (4) verbunden ist, und der Drain (D2) des anderen Transistors (6) mit der Last (3) verbunden ist, und daß die Gates (G1, G2) beider Transistoren (5, 6) mit der Steuereinheit (2) verbunden sind, mittels welcher der Betrieb der Feldeffekttransistoren als Schalter gesteuert wird;

- eine Diodenbrücke (13) über die Schalteinheit (1) geschaltet ist, wobei zwei (14, 15) der Dioden Gehäusedioden eines jeden Paares von Feldeffekttransistoren (11, 12) sind, und die Diodenbrücke verwendet wird, die Betriebsspannung der Steuereinheit (2) zu bilden;

- die Steuereinheit (2) eine Spannungsmeßanordnung (20a, 20b; 31, 38) zum Messen der Spannung über der Gruppe von Feldeffekttransistoren (11, 12) der Schalteinheit umfaßt; eine Überstromschutzeinheit (23), in welcher das Ergebnis der Spannungsmessung zur Überwachung des durch die Gruppe von Feldeffekttransistoren (11, 12) fließenden Stroms und Begrenzen des Überstroms, wenn die Gruppe von Feldeffekttransistoren (11, 12) eingeschaltet ist (A, Fig. 5), verwendet wird; und eine Synchronisiereinheit (25), in welcher das Ergebnis der Spannungsmessung zum Synchronisieren der Leistungseinstellung verwendet wird, wenn die Gruppe von Feldeffekttransistoren (11, 12) ausgeschaltet ist (B, Fig. 5).

2. Leistungssteller nach Anspruch 1, dadurch gekennzeichnet, daß die Spannungsmeßanordnung (20a, 20b; 31, 38) eine Vielzahl von in Reihe geschalteten Widerständen (21a, 22a, 21b, 22b, 32, 33, 39, 40, 41) umfaßt, die in Verbindung mit beiden Gruppen von Feldeffekttransistoren (11, 12) der Schalteinheit (1) angeordnet sind.

3. Leistungssteller nach Anspruch 1 oder 2, dadurch gekennzeichnet, daß die Überstromschutzeinheit (23) einen Feldeffekttransistor (24) umfaßt, an dessen Gate die Meßspannung von der Spannungsmeßanordnung (20a) zum Schalten des Feldeffekttransistors (24) von Aus nach Ein im Fall eines Kurzschlusses angelegt wird, sowie eine Schaltkreisanordnung zum Entladen der Ladungen der Gates der Paare von Feldeffekttransistoren (11, 12) der Verbindungseinheit (1) und zum Abschalten von diesen.

4. Leistungssteller nach Anspruch 1, 2 oder 3, dadurch gekennzeichnet, daß die Synchronisiereinheit (25) einen Feldeffekttransistor (26) umfaßt, an dessen Gate die Meßspannung von der Spannungsmeßanordnung angelegt wird, zum Schalten des Feldeffekttransistors von Ein nach Aus, und von welchem Feldeffekttransistor das Synchronisiersignal so als Ausgangssignal empfangen wird.

5. Leistungssteller nach einem der vorangehenden Ansprüche, dadurch gekennzeichnet, daß die Feldeffekttransistoren (5, 6; 7, 8; 9, 10; 11, 12) vom n-Typ sind.

**Revendications**

1. Un régulateur électronique de puissance, prévu pour réguler la puissance alternative fournie à une charge (3), comprenant une unité de commutation (1) et une unité de commande (2), l'unité de commutation (1) étant connectée en série avec la charge (3), et étant, de la manière la plus préférable, commandée au moyen de l'unité de commande (2), de manière que l'entrée de courant dans la charge débute lorsque le demi-cycle de tension agissant sur l'unité de commutation commence, et que l'entrée soit stoppée au niveau d'un point souhaité de ce même demi-cycle, caractérisé en ce que :

   - l'unité de commutation (1) comprend une pluralité de paires de transistors à effet de champ (5, 6, 7, 8; 9, 10; 11, 12), les sources (S1, S2) des deux transistors d'une paire (comme, par exemple, 5, 6) étant interconnectées, de manière connue en soi, le drain (D1) de l'un (5) des transistors à effet de champ étant connecté à la source de courant alternatif (4), et le drain (D2) de l'autre (6) transistor étant connecté à la charge (3), et en ce que les grilles (G1, G2) des deux transistors (5, 6) sont connectées à l'unité de commande (2), au moyen de laquelle le fonctionnement de commutation des transistors à effet de champ est commandé;

   - un montage en pont de diodes (13) est agencé dans l'unité de commutation (1), deux (14, 15) des diodes étant des diodes internes à chaque paire de transistors à effet de champ (11, 12), le montage en pont des diodes étant utilisé afin de créer la tension de fonctionnement de l'unité de commande (2);

   - l'unité de commande (2) comprend : un agencement de comptage de tension (20a, 20b; 31, 38) prévu pour mesurer la tension passant dans le groupe de transistors à effet de champ (11, 12) de l'unité de commutation; une unité de protection de courant de surintensité (23), dans laquelle le résultat de la mesure de tension est utilisé, pour surveiller le courant qui passe dans le groupe de transistors à effet de champ (11, 12) et limiter le courant de surintensité lorsque le groupe de transistors à effet de champ (11, 12) est activé (A, figure 5); et une unité de synchronisation (25), dans laquelle le résultat de la mesure de tension est utilisé afin de synchroniser la régulation de puissance, lorsque le groupe de transistors à effet de champ (11, 12) est désactivé (B, figure 5).

2. Un régulateur de puissance selon la revendication 1, caractérisé en ce que l'agencement de mesure de tension (20a, 20b; 31, 38) comprend une pluralité de transistors (21a, 22a, 21b, 22b; 32, 33, 39, 40, 41) connectés en série, agencés en connexion avec les deux transistors du groupe de transistors à effet de champ (11, 12) de l'unité de commutation (1).

3. Un régulateur de puissance selon la revendication 1 ou 2, caractérisé en ce que l'unité de protection de courant de surintensité (23) comprend un transistor à effet de champ (24), dont la grille est alimentée avec la tension de mesure venant de l'agencement de mesure de tension (20a), afin de commuter le transistor à effet de champ (24) de l'état désactivé à l'état activé, en cas de court-circuit, et un agencement de circuit, prévu pour décharger les charges des grilles des paires de transistors à effet de champ (11, 12) de l'unité de connexion (1) et les mettre en état désactivé.

4. Un régulateur de puissance selon la revendication 1, 2 ou 3, caractérisé en ce que l'unité de synchronisation (25) comprend un transistor à effet de champ (26), dont la grille est alimentée avec la tension de mesure venant de l'agencement de mesure de tension, afin de commuter le transistor à effet de champ de l'état désactivé à l'état activé, et transistor à effet de champ à partir duquel le signal de synchronisation est ainsi reçu en tant que signal de sortie.

5. Un régulateur de puissance selon l'une quelconque des revendications précédentes, caractérisé en ce que les transistors à effet de champ (5, 6, 7, 8; 9, 10; 11, 12) sont de type n.

EP 0 638 211 B1

Fig.1

Fig.2

8

Fig.3    Fig.4

Fig.5

Fig.6

Fig.7a

Fig.7b